(19) **Europäisches Patentamt / European Patent Office / Office européen des brevets**

(11) **EP 4 761 195 A1**

(12) **EUROPEAN PATENT APPLICATION**
published in accordance with Art. 153(4) EPC

(43) Date of publication:
**17.06.2026 Bulletin 2026/25**

(21) Application number: **24852253.4**

(22) Date of filing: **05.08.2024**

(51) International Patent Classification (IPC):
*H04L 27/26* (2006.01)  *H04L 27/04* (2006.01)
*H04L 27/12* (2006.01)  *H04W 52/02* (2009.01)

(52) Cooperative Patent Classification (CPC):
**H04L 27/04; H04L 27/12; H04L 27/26;**
**H04W 52/02;** Y02D 30/70

(86) International application number:
**PCT/KR2024/011498**

(87) International publication number:
**WO 2025/033899 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 US 202363532026 P**
**19.02.2024 KR 20240023345**

(71) Applicant: **LG Electronics Inc.**
**Yeongdeungpo-gu**
**Seoul 07336 (KR)**

(72) Inventors:
• **CHOI, Seunghwan**
  Seoul 06772 (KR)
• **YANG, Suckchel**
  Seoul 06772 (KR)
• **KIM, Jaehyung**
  Seoul 06772 (KR)
• **SHIN, Seokmin**
  Seoul 06772 (KR)
• **KIM, Seonwook**
  Seoul 06772 (KR)

(74) Representative: **Plasseraud IP**
**104 Rue de Richelieu**
**CS92104**
**75080 Paris Cedex 02 (FR)**

(54) **METHOD AND APPARATUS FOR TRANSMITTING AND RECEIVING SIGNALS IN WIRELESS COMMUNICATION SYSTEM**

(57) A method and an apparatus for transmitting and receiving signals in a wireless communication system, disclosed in the present specification, may comprise: receiving signals through a first receiver; performing specific operations on the basis of the received signals. A set of elements corresponding to 1-bit information of the signal is defined as one segment, and different sequences are used for N segments.

【FIG. 8】

EP 4 761 195 A1

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### TECHNICAL PROBLEM

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The present disclosure provides a method and apparatus for transmitting and receiving a signal in a wireless communication system.

In an aspect of the present disclosure, a method for transmitting and receiving a signal by a user equipment (UE) in a wireless communication system is provided, including receiving a signal through a first receiver of the UE and performing a specific operation based on the reception of the signal. A set of elements corresponding to 1-bit information of the signal is defined as one segment, and different sequences are used for N segments. N is a natural number equal to or greater than 2.

In another aspect of the present disclosure, there are provided a UE, a processor, and a storage medium as an apparatus for performing the signal transmission and reception method.

The apparatus may include an autonomous driving vehicle communicable with at least a UE, a network, and another autonomous driving vehicle other than the apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### ADVANTAGEOUS EFFECTS

According to one embodiment of the present disclosure, when signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

    FIG. 1 illustrates a radio frame structure.
    FIG. 2 illustrates a resource grid during the duration of a slot.

FIG. 3 illustrates a self-contained slot structure.

FIGS. 4 to 8 are diagrams illustrating methods for transmitting and receiving a signal according to the embodiments of the present disclosure.

FIGS. 9 to 12 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

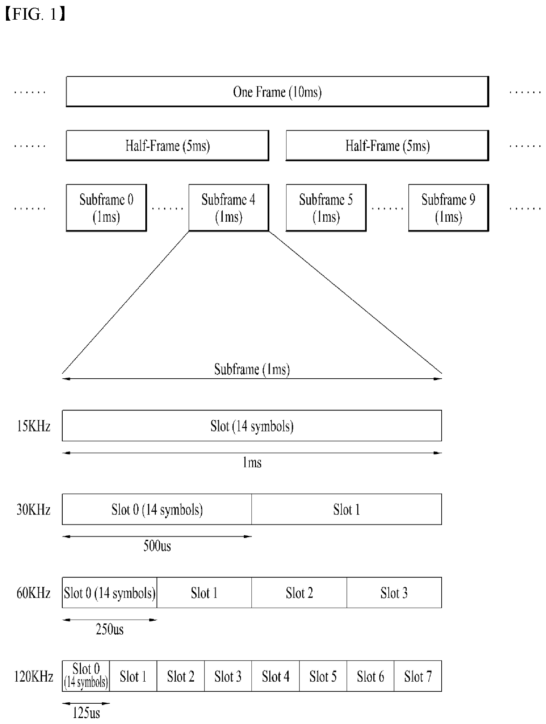

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |

(continued)

| SCS (15*2^u) | $N^{slot}_{symb}$ | $N^{frame,u}_{slot}$ | $N^{subframe,u}_{slot}$ |
|---|---|---|---|
| 240KHz (u=4) | 14 | 160 | 16 |

* $N^{slot}_{symb}$: number of symbols in a slot
* $N^{frame,u}_{slot}$: number of slots in a frame
* $N^{subframe,u}_{slot}$: number of slots in a subframe

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

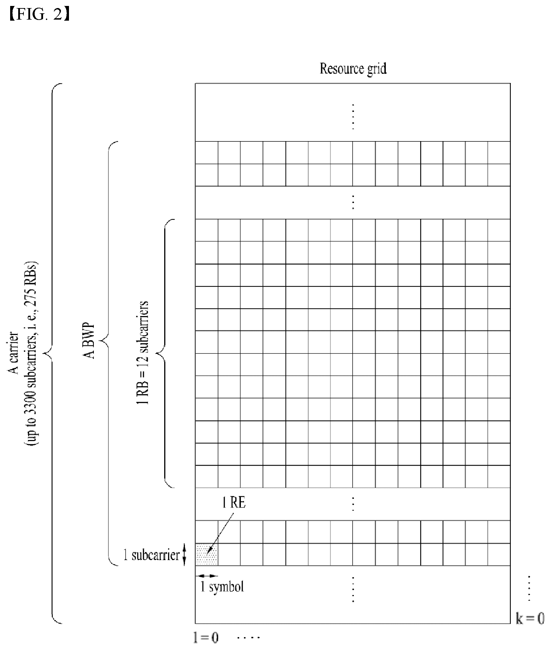

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m ∈ {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

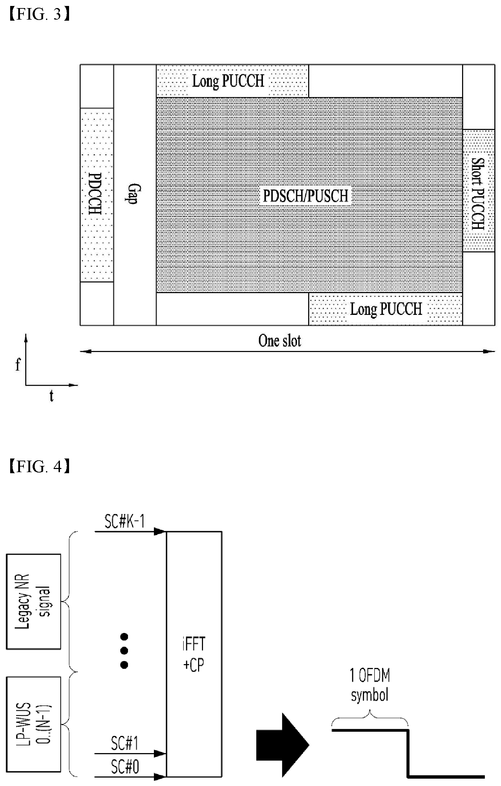

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

## LP-WUS (Low Power Wake-Up Signal)

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

In the Rel-18 NR standard, discussions are ongoing to introduce a low-power wake-up signal (LP-WUS) and a separate receiver capable of receiving such a signal, known as a low-power wake-up receiver or low-power wake-up radio (LP-WUR), as a new power consumption reduction method, which is somewhat different from the power consumption reduction techniques for UEs introduced and supported in Rel-16/17. If a receiver in the UE (DL receiver) of the conventional NR system is referred to as a main radio/receiver (MR), the LP-WUR represents a separate receiver (i.e., companion radio/receiver) capable of being introduced to reduce the power consumption of the MR. The term LP-WUR may be simply referred to as LR.

Options for an LP-WUS waveform generation method will be described below. These may be understood as different methods for generating multi-carrier on-off keying (MC-OOK) and multi-carrier frequency shift keying (MC-FSK) waveforms.

FIGS. 4 to 7 illustrate options for an LP-WUS waveform generation method.

FIGS. 4 to 7 relate to multi-carrier amplitude shift keying (MC-ASK) waveform generation. In FIGS. 4 to 7, K is an inverse fast Fourier transform (iFFT) size for cyclic prefix-orthogonal frequency division multiplexing access (CP-OFDMA), and N is the number of subcarriers (SCs) used for an LP-WUS, including a potential guard band.

FIG. 4 illustrates Option OOK-1.

In Option OOK-1, one OFDM symbol includes a single bit. For the SCs of the LP-WUS, OOK=1 means that all SCs are modulated. OOK=0 means that all SCs have zero power (from a baseband perspective).

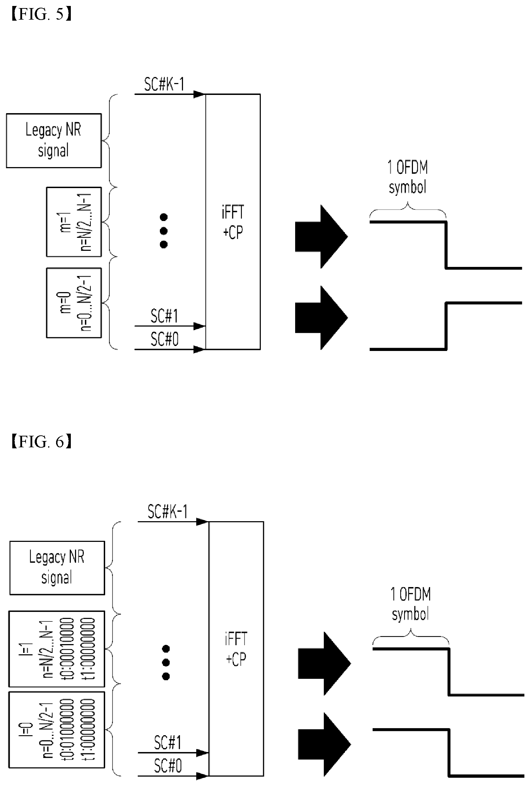

FIG. 5 illustrates Option OOK-2.

Referring to FIG. 5, in Option OOK-2, M bits of OOK are included in parallel in the frequency domain. The N SCs of the LP-WUS are divided into M segments. A guard band may be included between every two segments and/or around each segment. OOK=1 means that all SCs within a segment are modulated. OOK=0 means that all SCs within a segment have zero power (from a baseband perspective).

FIG. 6 illustrates Option OOK-3.

Referring to FIG. 6, Option OOK-3 corresponds to multi-tone single-bit OOK. The N SCs of the LP-WUS are divided into L segments. No guard band exists between segments, but a guard band may exist around a segment. OOK=1 means that one SC (recognized by the UE) of each segment is modulated, and the remaining SCs have zero power (from a baseband perspective). OOK=0 means that all SCs within the segment have zero power (from a baseband perspective).

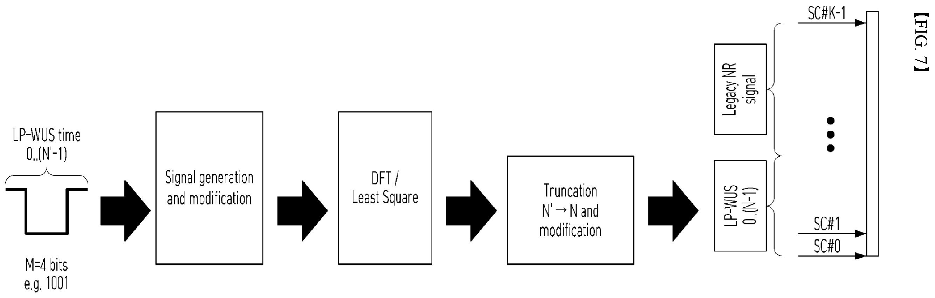

FIG. 7 illustrates Option OOK-4.

Referring to FIG. 7, in Option OOK-4, M-bit OOK in the time domain is transformed. The N SCs of OOK-1 are generated by a transform (DFT/least square). N' samples are generated from M bits. Signal modification may or may not be used. Truncation or other additional modifications may or may not be used. If they are not used, N and N' are the same. N' may not be equal to K.

In FIGS. 4 to 7, the modulated SCs may be, for example, quadrature amplitude modulation (QAM) symbols, sequences, or other signals.

SCs of a potential guard band have zero power (from a baseband perspective). Optionally, out of two additional segments, one may always be modulated and the other may always be transmitted with zero power (from a baseband perspective).

However, even if a specific option is used in FIGS. 4 to 7, the characteristics of the other options are not excluded. For example, even in Option OOK-1, a plurality of bits may be included in one OFDM symbol.

For generation of M-bit MC-FSK, the following options may be considered.

Option FSK-1: The N SCs of the LP-WUS are divided into M pairs of segments, and potential guard bands may be located between every two segments and around each segment. A segment includes one or a plurality of consecutive SCs. One segment of a pair of segments may be modulated, and the other segment may have zero power (from a baseband perspective).

Option FSK-2: The N SCs of the LP-WUS are divided into $2^M$ segments, and potential guard bands may be located between every two segments and around each segment. A segment includes one or a plurality of continuous SCs. One segment of a pair of segments may be modulated, and the other segment may have zero power (from a baseband perspective).

In both FSK options, M > 0 and N > 1.

In MC-ASK or MC-FSK waveform generation, the subcarrier spacing (SCS) of a CP-OFDM symbol used for LP-WUS generation may be the same as an SCS used for other NR transmissions of CP-OFDM symbols overlapping in the time domain. When the SCSs are different, FDM/TDM multiplexing between the LP-WUS and other NR transmissions, link performance, impact on legacy UEs (which do not support the LP-WUS), and impact on a gNB may be considered.

The options for the LP-WUS waveform generation method have been described above.

Methods for generating a waveform or signal structure likely to be used for an LP-WUS and methods for configuring it are proposed below. In addition, a method for monitoring an LP-WUS in an LP-WUR, a synchronization signal (hereinafter, referred to as an LP-SS) that may be transmitted for synchronization of the LP-WUR, and a method for operating the LP-WUS/WUR are proposed.

The proposed methods of the present disclosure may be methods for generating the waveform of an LP-WUS and/or methods for generating the waveform of an LP-SS (i.e., a separate synchronization signal for an LP-WUR). Although the following description is given in the context of the LP-WUS for convenience, a method for generating the LP-WUS may also be used to generate the LP-SS.

A (transmitter and) receiver for an NR signal/channel is expressed as an MR, and an LP-WUS receiver is expressed as an LR or LP-WUR.

When waveforms such as the aforementioned OOK-1, OOK-2, OOK-3, OOK-4, FSK-1, and FSK-2 are configured, the proposed methods of the present disclosure may all be applied. For example, a method for defining a sequence for a segment in the time domain may be used to define a pre-DFT sequence of OOK-4. Alternatively, the same method may be used as a method for generating a time-domain signal of FSK-1 or FSK-2.

When M bits are transmitted in each OFDM symbol of the MR, each bit may be mapped to samples (or a bitstream) of length L. L samples for an $n^{th}$ bit are expressed as B(n)={b(n,1), ..., b(n,L)}. Herein, n=1,..., M. Further, in OOK-4, since the OFDM symbol of the MR may be divided into different time periods by {B(1),...,B(M)}, each B(n) may be expressed as a segment (in the time domain).

If Manchester encoding (or repetition or another type of channel coding or input encoding) is used for OOK-4, one bit may be transmitted through a plurality of segments. For example, when 0.5 rate Manchester encoding is used, one bit may be transmitted through two consecutive segments. In this case, one segment may have non-zero power and the other segment may have zero power. In the present disclosure (for convenience of description), various methods are proposed without considering such encoding unless otherwise specified. However, when such encoding is applied, the proposed methods of the present disclosure may be equally applied by only changing the number of segments per bit.

[1] Method for applying time-domain sequence

[1-1] In the MC-OOK signal generation method in OOK-4, information bits to be transmitted through the LP-WUS are defined in the time domain and converted into a frequency-domain signal through a DFT (or least square) block, and the frequency-domain signal is used as an input to an IFFT block in consideration of a frequency area allocated to the LP-WUS. When M bits are transmitted per OFDM symbol, an IFFT output signal may be divided into M time-domain (TD) segments. One bit is transmitted per TD segment. Further, LP-WUS information may be transmitted across a plurality of OFDM symbols.

For example, when a UE ID is transmitted through the LP-WUS, (for example) 48 bits may be required. There may be limitations in transmitting 48 bits in a single OFDM symbol. For example, when the LP-WUS information includes M*K bits, one LP-WUS transmission may be performed through K OFDM symbols, and M bits may be transmitted per OFDM symbol. The proposed method of this section may correspond to a method for changing or precoding LP-WUS information bits before DFT (or least square), that is, in the time domain. Alternatively, it may correspond to an operation of a 'signal generation and modification' block in a transmitter baseband block diagram (FIG. 7) of OOK-4.

[1-2] When each TD segment includes L samples, a pre-DFT signal corresponding to the samples is expressed as B={b(1), ..., b(L)}. When '0' is transmitted in the TD segment, b(1)=...=b(L)=, and when '1' is transmitted, b(1)=...=b(L)=1. Assuming a specific sequence of length L is S, B may be precoded using S. This is denoted as B*S, which may be expressed as {b(1)*s(1), b(2)*s(2), ..., b(L)*s(L)} in a specific example. This precoding may change the shape of the frequency spectrum of the IFFT output signal. Through this, improvement in reception performance may be expected in a frequency-selective fading channel environment. For example, when B is used as is without precoding, the spectrum may take a shape where a lot of energy is concentrated on some frequencies. A flat spectrum is obtained by randomizing the phase of B*S through S, a flat spectrum is obtained. This allows the signal to have characteristics robust against a fading channel.

[1-3] S may be one of, but is not limited to, a Zadoff-Chu (ZC) sequence or m-sequence of length L, a Gold sequence, a pseudo-random sequence, and a computer generated sequence (CGS). In the proposed methods described below, these sequences are collectively referred to as a ZC sequence. However, the proposed methods described below may be equally applied even when other types of sequences are used. Alternatively, S may be a sequence of length L out of a ZC sequence of length $M\_1$ (where $M\_1 > L$). For example, only the first L samples or the last L samples of the ZC sequence of length $M\_1$ may be used. Alternatively, S may be a sequence of length L (cyclically) extended from a ZC sequence of length $M\_2$ (where $M\_2 < L$). For example, a sequence of length L may be generated by attaching 'L - $M\_2$' samples from the front of the ZC sequence of length $M\_2$ to the end, or by attaching 'L - $M\_2$' samples from the end of the ZC sequence of length $M\_2$ to the front. In this case, $M\_1$ may be the smallest prime number larger than L, and $M\_2$ may be the largest prime number smaller than L.

A sequence defined in section 5.2.1 of 3GPP TS 38.211 may be used as the pseudo-random sequence among the sequence types. As the CGS sequence, a sequence (Type 1 or Type 2 Low-PAPR sequence) defined in section 5.2.2 or section 5.2.3 of 3GPP TS 38.211 may be used. In particular, when the length L of S is less than or equal to a specific value, the use of the CGS sequence may be advantageous in terms of power variation in the time/frequency domain. In this case, the specific value may be predefined or set by RRC, an SIB, or the like. When the number M of bits transmitted per OFDM symbol is configurable, the length of the segment may vary accordingly, and the length L of S may be changed. Different sequences may be selectively used according to the value of M (or according to L).

[1-4] Method for applying different sequence on TD segment basis

When one OFDM symbol includes M TD segments (or when M bits are transmitted through one OFDM symbol), a different ZC sequence may be used for each TD segment. In this case, when the length (or the number of samples) of each TD segment is L, a sequence of length L may be used as the ZC sequence. Specifically, one or a combination of two or more of the following methods may be used.

- Method 1: A different cyclic shift (CS) (relative to a reference sequence, i.e., a sequence with CS(0)) may be applied to each TD segment. For example, when M = 4, the CSs of segment #1, #2, #3, and #4 may be 0, 3, 6, and 9, respectively. Table 4 illustrates the shapes of sequences according to CSs as an example (assuming L = 16).

[Table 4]

| CS=0 | s(0), s(1), s(2), s(3), s(4), s(5), s(6), s(7), s(8), s(9), s(10), s(11), s(12), s(13), s(14), s(15) |
|------|------|
| CS=1 | s(1), s(2), s(3), s(4), s(5), s(6), s(7), s(8), s(9), s(10), s(11), s(12), s(13), s(14), s(15), s(0) |
| CS=2 | s(2), s(3), s(4), s(5), s(6), s(7), s(8), s(9), s(10), s(11), s(12), s(13), s(14), s(15), s(0), s(1) |
| CS=3 | s(3), s(4), s(5), s(6), s(7), s(8), s(9), s(10), s(11), s(12), s(13), s(14), s(15), s(0), s(1), s(2) |
| ... | ... |

In the present disclosure, when a CS is n, it is denoted as CS(n). This means that n samples are cyclically shifted relative to the sequence with CS(0). Further, (depending on the context of the present disclosure), when it is said that CS(n) is applied, this may imply a scheme in which, for two TD segments, the sequence of the immediately following TD segment is cyclically shifted by n samples relative to the sequence of the previous TD segment.

In this case, the CS may be determined as a value that is coprime to the sequence length L. For example, L=12 and the CS may be 7.

Alternatively, the CS may be determined as L/M. For example, when L=12 and M=4, a CS of 3 may be applied. When L/M is not an integer, ceil(L/M) or floor(L/M) may be used.

- Method 2: A different phase shift (PS) may be applied to each TD segment. For example, S=(1, ..., 1) may be used for TD segment #1, $S=(\exp(j*\alpha), ..., \exp(j*\alpha))$ for TD segment #2, $S=(\exp(j*2\alpha), ..., \exp(j*2\alpha))$ for TD segment #3, and $S=(\exp(j*3\alpha), ..., \exp(j*3\alpha))$ for TD segment #4.

In the present disclosure, when the PS is n, it is denoted as PS(n). This may mean a sequence obtained by multiplying a sequence with PS(0) by a specific value. The specific value may have an amplitude of 1 and a non-zero phase. For example, the specific value for PS(n) may mean a complex number exp(j*n). The PS value may be determined as M. Alternatively, the PS value may be determined as 1/M.

- Method 3: A different CS and a different PS may be applied to each TD segment. For example, when a ZC sequence used for TD segment #1 is denoted as s, CS(7) and PS(1) may be applied to s for TD segment #2, CS(14) and PS(2) may be applied to s for TD segment #3, and CS(21) and PS(3) may be applied to s for TD segment #4.
- Method 4: (For a specific sequence), an initial state used for sequence generation may be different for each TD segment.
- Method 5: (For a specific sequence), the root index of a ZC sequence may be different for each TD segment.

[1-5] Method for applying different sequence on TD segment group basis

When one OFDM symbol includes M TD segments (or when M bits are transmitted through one OFDM symbol), different ZC sequences may be used in units of every X TD segments. In this case, the X TD segments are expressed as a TD segment group. When the length (or the number of samples) of each TD segment is L, the length of a ZC sequence applied to each group may be X*L. One or a combination of two or more of the following methods may be used.

- Method 1: A different CS may be applied to each TD segment group. In this case, the CS may be determined as a value coprime to the sequence length X*L, or determined as a value coprime to L. Alternatively, the CS may be determined as X*L/M or L/M. When the corresponding value is not an integer, ceil( ) or floor( ) may be used.
- Method 2: A different PS may be applied to each TD segment group. In this case, the PS value may be determined as X*M or M. Alternatively, the PS value may be determined as 1/(X*M) or 1/M.
- Method 3: A different CS and a different PS may be applied to each TD segment group.
- Method 4: (For a specific sequence), an initial state used for sequence generation may be different for each TD segment group.
- Method 5: (For a specific sequence), the root index of a ZC sequence may be different for each TD segment group.

When Manchester encoding (or other specific channel encoding or input encoding) is applied across a plurality of segments, the TD segment group may be determined as a (Manchester) encoded segment group. Alternatively, TD segments used to carry one bit may be determined as one TD segment group. For example, when one bit is transmitted through two consecutive TD segments using Manchester encoding, the two consecutive TD segments may be determined as a TD segment group.

Additionally, the above method may be applied in a state where X=M, that is, a TD segment group is set to have the same length as an OFDM symbol.

[1-6] Method for applying different sequence per unit of some samples of TD segment

When one OFDM symbol includes M TD segments (or when M bits are transmitted through one OFDM symbol), a different ZC sequence may be used per 1/X length unit of a TD segment. In this case, when the length (or the number of samples) of each TD segment is L, L/X samples are denoted as a sub-segment, and the length of a ZC sequence applied to each sub-segment may be L/X. One or a combination of two or more of the following methods may be used.

- Method 1: A different CS may be applied to each sub-segment. In this case, the CS may be determined as a value coprime to the sequence length L/X, or determined as a value coprime to L. Alternatively, the CS may be determined as L/(X*M) or L/M. When the corresponding value is not an integer, ceil( ) or floor( ) may be used.
- Method 2: A different PS may be applied to each sub-segment. In this case, the PS value may be determined as M/X or M. Alternatively, the PS value may be determined as 1/(M/X) or 1/M.
- Method 3: A different CS and a different PS may be applied to each sub-segment.
- Method 4: (For a specific sequence), an initial state used for sequence generation may be different for each sub-segment.
- Method 5: (For a specific sequence), the root index of a ZC sequence may be different for each sub-segment.

[1-7] The methods of [1-4] to [1-6] above may be applied only when a bit transmitted through each TD segment (or segment group or sub-segment) is '1'. Alternatively, the methods of [1-4] to [1-6] may be applied to both cases where a bit transmitted through each TD segment (or segment group or sub-segment) is '0' and '1'.

For example, regarding Method 1 of [1-4],

- When M=4 and '1111' is transmitted during one OFDM symbol, CS(0), CS(n), CS(2*n), and CS(3*n) are applied to TD segments #1, #2, #3, and #4, respectively, regardless of whether Method 1 is applied to '0'.
- When M=4 and '1010' is transmitted during one OFDM symbol, if Method 1 is applied to both '0' and '1', CS(0) and CS(2*n) are applied to TD segments #1 and #3, respectively. If Method 1 is applied only to '1', CS(0) and CS(n) are applied to TD segments #1 and #3, respectively.
- When M=4 and '1100' is transmitted during one OFDM symbol, if Method 1 is applied to both '0' and '1', CS(0) and CS(2*n) are applied to TD segments #1 and #2, respectively. If Method 1 is applied only to '1', CS(0) and CS(n) are applied to TD segments #1 and #2, respectively.

In another example, regarding Method 2 of [1-4],

- When M=4 and '1111' is transmitted during one OFDM symbol, PS(0), PS(n), PS(2*n), and PS(3*n) are applied to TD segments #1, #2, #3, and #4, respectively, regardless of whether Method 2 is applied to '0'.
- When M=4 and '1010' is transmitted during one OFDM symbol, if Method 2 is applied to both '0' and '1', PS(0) and PS(2*n) are applied to TD segments #1 and #3, respectively. If Method 2 is applied only to '1', PS(0) and PS(n) are applied to TD segments #1 and #3, respectively.
- When M=4 and '1100' is transmitted during one OFDM symbol, if Method 2 is applied to both '0' and '1', PS(0) and PS(2*n) are applied to TD segments #1 and #2, respectively. If Method 2 is applied only to '1', PS(0) and PS(n) are applied to TD segments #1 and #2, respectively.

[1-8] One or more of the methods proposed in [1-4] to [1-6] above may be selectively applied, when M is equal to or greater than (or equal to or less than) a specific value. When M is sufficiently small, the length of a segment is long, and thus it may be efficient to apply a CS or a PS on a sub-segment basis. On the contrary, when M is sufficiently large, the length of the segment is short, and thus it may be efficient to apply a CS or a PS on a TD segment group basis. The specific value may be predefined (for each M value) or set by RRC or an SIB.

Alternatively, the unit for applying a CS or a PS may be predefined differently according to an M value. Alternatively, after the unit for applying a CS or a PS is set by RRC or the like, the unit may be adaptively changed according to an M value used/set for LP-WUS transmission. Alternatively, an M value, a CS value, or a PS value, or a relationship between M and CS/PS may be configured through an SIB.

[1-9] An offset may be set for the CS or PS value on an OFDM symbol basis. That is, when LP-WUS data is transmitted through N OFDM symbols, an additional offset may be set for each OFDM symbol in addition to applying a CS or a PS on a TD segment basis (or on a segment group or sub-segment basis) within the OFDM symbol. For example, for convenience of description, when a sequence to which CS(n1) is applied for TD segment #1 is denoted as seq(n1) and a PS applied to the TD segment is denoted as p1, for M=4, a pre-DFT signal for one OFDM symbol may be expressed as Equation 1 in the order of TD segments.

$$[\text{Equation 1}]$$

$$\{p1*seq(n1), p2*seq(n2), p3*seq(n3), p4*seq(n4)\}$$

For each $k^{th}$ OFDM symbol, when an offset of 'a(k)' is applied to a PS and an offset of 'b(k)' is applied to a CS, a pre-DFT signal for the k-th OFDM symbol may be expressed as follows in the order of TD segments.

$$\{(p1*a(k))*seq(n1+b(k)), (p2*a(k))*seq(n2+b(k)), (p3*a(k))*seq(n3+b(k)), (p4*a(k))*seq(n4+b(k))\} \qquad [\text{Equation 2}]$$

When an offset is applied to the PS and no offset is applied to the CS, it may correspond to a case where b(k)=0 in Equation 2. When no offset is applied to the PS and an offset is applied to the CS, it may correspond to a case where a(k)=1 in Equation 2.

The offset may be applied in units of X OFDM symbol groups. X may be predefined or set by RRC or an SIB.

The offset may be determined according to a cell ID, an SFN, a (sub)frame index, a slot index, and/or a symbol index. For example, a relationship between the offset value for the PS or the CS and the cell ID and/or one or more indexes may be configured by RRC or an SIB. Alternatively, the offset value for the CS or the PS may be determined through a (predefined) equation in which the cell ID and/or the one or more indexes are variables. For example, a cell-specific offset may be determined through an equation "cell ID" mod "sequence length." Alternatively, an equation "slot index" mod "sequence length" or an equation "symbol index" mod "sequence length" may be used as the offset.

In an embodiment of the method for assigning an offset for a CS or PS value on an OFDM symbol basis, an offset based on a cell ID and/or one or more indexes may be applied in a state where different CSs and the same PS are set between TD segments. For example, a pre-DFT signal for one OFDM symbol may be expressed as Equation 3 in the order of TD segments.

$$[Equation\ 3]$$

As a method for applying an offset to a CS or PS value on an OFDM symbol basis, an offset based on a cell ID and/or one or more indexes may be applied in a state where different PSs and the same CS are set between TD segments. For example, the signal a pre-DFT signal for one OFDM symbol may be expressed as Equation 4 in the order of TD segments.

$$[Equation\ 4]$$

$$\{(p1*a(k))*seq(n),\ (p2*a(k))*seq(n),\ (p3*a(k))*seq(n),\ (p4*a(k))*seq(n)\}$$

[1-10] When there are a plurality of TD segments (or segment groups or sub-segments) for transmitting one bit (for example, when a method such as Manchester encoding or a channel coding method such as repetition is used), the proposed offset and/or CS and/or PS values, whether to apply them, and the application unit may be independently defined or configured for each TD segment (or segment group or sub-segment).

[1-11] When there are a plurality of TD segments (or segment groups or sub-segments) as proposed above, a CS and/or PS value for each unit, or a CS or PS offset value for each OFDM symbol (or group) may differ for each cell. For example, an additional offset determined by a function of a cell ID may be added for each cell. Through this method, reduction of inter-cell interference may be expected.

For example, the equation "cell ID" mod "sequence length" may be used as the root index of a ZC sequence or as the initial state of an m-sequence or the like. Alternatively, the equation "cell ID" mod "sequence length" may be used as a cell-specific CS value or PS value. Alternatively, an offset value of 0 may be applied in the first OFDM symbol of a slot satisfying the equation "slot index" mod "sequence length" = 0 or in an OFDM symbol satisfying the equation "symbol index" mod "sequence length"=0, and specified offset, CS, and PS values may be sequentially applied starting from the next OFDM symbol. Alternatively, the equation "cell ID" mod "sequence length" may be used as a cell-specific CS or PS value. Alternatively, a sequence with CS(0) and/or PS(0) may be applied in the first TD segment (or segment group or sub-segment) of the first OFDM symbol of a slot satisfying "slot index" mod "sequence length"=0 or an OFDM symbol satisfying "symbol index" mod "sequence length"=0, and specified CS and PS values may be sequentially applied starting from the next TD segment (or segment group or sub-segment).

[1-12] Different values for a CS and/or a PS applied on a TD segment (or segment group or sub-segment) basis or a CS or PS offset value applied on an OFDM symbol (or group) basis may be applied between an LP-WUS used for RRC connected mode and an LP-WUS used for RRC idle/inactive mode.

[2] Method for applying frequency-domain sequence

[2-1] In the OOK-2 signal generation method, information bits to be transmitted through the LP-WUS are defined in the frequency domain and then used as an input to an IFFT block in the consideration of a frequency range allocated to the LP-WUS. When M bits are transmitted per OFDM symbol, the IFFT input signal may be divided into M frequency-domain (FD) segments. One bit is transmitted per FD segment. OOK-1 may correspond to a case where M=1 in OOK-2. Although FSK-1 is similar to OOK-2, an IFFT output is in the form of an FSK signal, and one bit is transmitted per two FD segments, for a frequency range in which the LP-WUS is transmitted. FSK-2 is similar to FSK-1, but M bits are transmitted per $2^M$ segments. The following proposed methods may be applied to an LP-WUS signal generation method in which a frequency range for LP-WUS transmission into specific units for 1-bit transmission (e.g., FD segments), such as OOK-1, OOK-2, FSK-1, and FSK-2.

A method proposed in this section may correspond to a method for changing or precoding LP-WUS information bits before IFFT, that is, in the frequency domain.

[2-2] When each FD segment includes L SCs, a pre-IFFT signal corresponding to them will be denoted as B= {b(1), ..., b(L)}. When '0' is transmitted in the corresponding FD segment, b(1)=...=b(L)=0, and when '1' is transmitted, a specific non-zero value may be used for b(1) to b(L). Assuming a specific sequence of length L is S, B may be precoded using S. This is denoted as B*S, and as a specific example, it may be expressed as {b(1)*s(1), b(2)*s(2), ..., b(L)*s(L)}. Through this precoding, the peak-to-average power ratio (PAPR) of the IFFT output signal may be adjusted.

[2-3] S may be one of, but is not limited to, a ZC sequence or m-sequence of length L, a Gold sequence, a pseudo-random sequence, and a CGS. In the proposed methods described below, these sequences are collectively referred to as a ZC sequence. However, the proposed methods described below may be equally applied even when other types of sequences are used. Alternatively, S may be a sequence of length L out of a ZC sequence of length M_1 (where M_1 > L). For example, only the first L samples or the last L samples of the ZC sequence of length M_1 may be used. Alternatively, S may be a sequence of length L (cyclically) extended from a ZC sequence of length M_2 (where M_2 < L). For example, a sequence of length L may be generated by attaching 'L - M_2' samples from the front of the ZC sequence of length M_2 to the end, or by attaching 'L - M_2' samples from the end of the ZC sequence of length M_2 to the front. In this case, M_1 may be the smallest prime number larger than L, and M_2 may be the largest prime number smaller than L.

A sequence defined in section 5.2.1 of 3GPP TS 38.211 may be used as the pseudo-random sequence among the sequence types. As the CGS sequence, a sequence (Type 1 or Type 2 Low-PAPR sequence) defined in section 5.2.2 or section 5.2.3 of 3GPP TS 38.211 may be used. In particular, when the length L of S is less than or equal to a specific value, the use of the CGS sequence may be advantageous in terms of power variation in the time/frequency domain. In this case, the specific value may be predefined or set by RRC, an SIB, or the like. When the number M of bits transmitted per OFDM symbol is configurable, the length of the segment may vary accordingly, and the length L of S may be changed. Different sequences may be selectively used according to the value of M (or according to L).

[2-4] Method for applying different sequence on FD segment basis

When one OFDM symbol includes M FD segments (or when M bits are transmitted through one OFDM symbol), a different ZC sequence may be used for each FD segment. In this case, when the length (or the number of samples) of each FD segment is L, a sequence of length L may be used as the ZC sequence. Specifically, one or a combination of two or more of the following methods may be used.

[0095]    - Method 1: A different CS (relative to a reference sequence, i.e., a sequence with CS(0)) may be applied to each FD segment. For example, when M = 4, the CSs of segment #1, #2, #3, and #4 may be 0, 3, 6, and 9, respectively. Table 5 illustrates the shapes of sequences according to CSs as an example (assuming L = 16).

[Table 5]

| CS=0 | s(0), s(1), s(2), s(3), s(4), s(5), s(6), s(7), s(8), s(9), s(10), s(11), s(12), s(13), s(14), s(15) |
|---|---|
| CS=1 | s(1), s(2), s(3), s(4), s(5), s(6), s(7), s(8), s(9), s(10), s(11), s(12), s(13), s(14), s(15), s(0) |
| CS=2 | s(2), s(3), s(4), s(5), s(6), s(7), s(8), s(9), s(10), s(11), s(12), s(13), s(14), s(15), s(0), s(1) |
| CS=3 | s(3), s(4), s(5), s(6), s(7), s(8), s(9), s(10), s(11), s(12), s(13), s(14), s(15), s(0), s(1), s(2) |
| ... | ... |

In the present disclosure, when a CS is n, it is denoted as CS(n). This means that n samples are cyclically shifted relative to the sequence with CS(0). Further, (depending on the context of the present disclosure), when it is said that CS(n) is applied, this may imply a scheme in which, for two FD segments, the sequence of the immediately following FD segment is cyclically shifted by n samples relative to the sequence of the previous FD segment.

In this case, the CS may be determined as a value that is coprime to the sequence length L. For example, L=12 and the CS may be 7.

Alternatively, the CS may be determined as L/M. For example, when L=12 and M=4, a CS of 3 may be applied. When L/M is not an integer, ceil(L/M) or floor(L/M) may be used.

-    Method 2: A different PS may be applied to each FD segment. For example, S=(1, ..., 1) may be used for FD segment #1, S=(exp(j*$\alpha$), ..., exp(j*$\alpha$)) for FD segment #2, S=(exp(j*2$\alpha$), ..., exp(j*2$\alpha$)) for segment #3, and S=(exp(j*3$\alpha$), ..., exp(j*3$\alpha$)) for segment #4.

In the present disclosure, when the PS is n, it is denoted as PS(n). This may mean a sequence obtained by multiplying a sequence with PS(0) by a specific value. The specific value may have an amplitude of 1 and a non-zero phase. For example, the specific value for PS(n) may mean a complex number exp(j*n). The PS value may be determined as M. Alternatively, the PS value may be determined as 1/M.

-    Method 3: A different CS and a different PS may be applied to each FD segment. For example, when a ZC sequence used for FD segment #1 is denoted as s, CS(7) and PS(1) may be applied to s for FD segment #2, CS(14) and PS(2) may be applied to s for FD segment #3, and CS(21) and PS(3) may be applied to s for FD segment #4.
-    Method 4: (For a specific sequence), an initial state used for sequence generation may be different for each FD segment.
-    Method 5: (For a specific sequence), the root index of a ZC sequence may be different for each FD segment.

[2-5] Method for applying different sequence on FD segment group basis

When one OFDM symbol includes M FD segments (or when M bits are transmitted through one OFDM symbol), different ZC sequences may be used in units of X FD segments. In this case, the X FD segments are expressed as an FD segment group. When the length (or the number of samples) of each FD segment is L, the length of a ZC sequence applied to each group may be X*L. One or a combination of two or more of the following methods may be used.

- Method 1: A different CS may be applied to each FD segment group. In this case, the CS may be determined as a value coprime to the sequence length X*L, or determined as a value coprime to L. Alternatively, the CS may be determined as X*L/M or L/M. When the corresponding value is not an integer, ceil( ) or floor( ) may be used.
- Method 2: A different PS may be applied to each FD segment group. In this case, the PS value may be determined as X*M or M. Alternatively, the PS value may be determined as 1/(X*M) or 1/M.
- Method 3: A different CS and a different PS may be applied to each FD segment group.
- Method 4: (For a specific sequence), an initial state used for sequence generation may be different for each FD segment group.
- Method 5: (For a specific sequence), the root index of a ZC sequence may be different for each FD segment group.

Additionally, in the case of X = M in OOK-2, X=2*M in FSK-1, or X=2^M in FSK-2, the above method may be applied in a state where all SCs allocated to the LP-WUS are configured to form a single FD segment group.

[2-6] Method for applying different sequence per unit of some samples of FD segment

When one OFDM symbol includes M FD segments (or when M bits are transmitted through one OFDM symbol), a different ZC sequence may be used per 1/X length unit of an FD segment. In this case, when the length (or the number of samples) of each FD segment is L, L/X samples are denoted as a sub-segment, and the length of a ZC sequence applied to each sub-segment may be L/X. One or a combination of two or more of the following methods may be used.

- Method 1: A different CS may be applied to each sub-segment. In this case, the CS may be determined as a value coprime to the sequence length L/X, or determined as a value coprime to L. Alternatively, the CS may be determined as L/(X*M) or L/M. When the corresponding value is not an integer, ceil( ) or floor( ) may be used.
- Method 2: A different PS may be applied to each sub-segment. In this case, the PS value may be determined as M/X or M. Alternatively, the PS value may be determined as 1/(M/X) or 1/M.
- Method 3: A different CS and a different PS may be applied to each sub-segment.
- Method 4: (For a specific sequence), an initial state used for sequence generation may be different for each sub-segment.
- Method 5: (For a specific sequence), the root index of a ZC sequence may be different for each sub-segment.

[2-7] Method for applying long ZC sequences on specific SC basis

The LP-WUS may be multiplexed with an NR signal/channel (e.g., PDSCH) in the frequency domain. Accordingly, the NR signal/channel and the LP-WUS may be converted into a time-domain signal through a single IFFT, for transmission. Alternatively, the LP-WUS and the NR signal/channel may pass through separate IFFTs and be transmitted as a combined signal in the time domain. When the size of the IFFT is N, a portion of a sequence of length N may be used as a ZC sequence to be applied to each FD segment (or segment group or sub-segment). For example, a ZC sequence of length N (having a different root index for each cell) is defined/generated. Subsequently, the first sample may be mapped to the lowest SC of the IFFT, the second sample to the next subcarrier, and so on, until the last sample is mapped to the highest SC of the IFFT. In this state, for the SCs of each FD segment (or segment group or sub-segment) used for the LP-WUS, only a mapped portion of the ZC sequence of length N may be used.

Alternatively, a ZC sequence of a length capable of covering an entire channel BW (including the SCs of the IFFT) may be defined, and only a portion of the defined ZC sequence, which corresponds to each FD segment (or segment group or sub-segment) of the LP-WUS, may be used.

[2-8] The methods of [2-4] to [2-7] above may be applied only when a bit transmitted through each FD segment (or segment group or sub-segment) is '1'. Alternatively, the methods of [1-4] to [1-6] may be applied to both cases where a bit transmitted through each FD segment (or segment group or sub-segment) is '0' and '1'.

For example, regarding Method 1 of [2-4],

- When '1111' is transmitted through FD segments #1, #2, #3, and #4, CS(0), CS(n), CS(2*n), and CS(3*n) are applied to FD segments #1, #2, #3, and #4, respectively, regardless of whether Method 1 is applied to '0'.

- When '1010' is transmitted through FD segments #1, #2, #3, and #4, if Method 1 is applied to both '0' and '1', CS(0) and CS(2*n) are applied to FD segments #1 and #3, respectively. If Method 1 is applied only to '1', CS(0) and CS(n) are applied to FD segments #1 and #3, respectively.
- When '1100' is transmitted through FD segments #1, #2, #3, and #4, if Method 1 is applied to both '0' and '1', CS(0) and CS(2*n) are applied to FD segments #1 and #2, respectively. If Method 1 is applied only to '1', CS(0) and CS(n) are applied to FD segments #1 and #2, respectively.

In another example, regarding Method 2 of [2-4],

- When '1111' is transmitted through FD segments #1, #2, #3, and #4, PS(0), PS(n), PS(2*n), and PS(3*n) are applied to FD segments #1, #2, #3, and #4, respectively, regardless of whether Method 2 is applied to '0'.
- When '1010' is transmitted through FD segments #1, #2, #3, and #4, if Method 2 is applied to both '0' and '1', PS(0) and PS(2*n) are applied to FD segments #1 and #3, respectively. If Method 2 is applied only to '1', PS(0) and PS(n) are applied to FD segments #1 and #3, respectively.
- When '1100' is transmitted through FD segments #1, #2, #3, and #4, if Method 2 is applied to both '0' and '1', PS(0) and PS(2*n) are applied to FD segments #1 and #2, respectively. If Method 2 is applied only to '1', PS(0) and PS(n) are applied to FD segments #1 and #2, respectively.

[2-9] One or more of the methods proposed in [2-4] to [2-7] above may be selectively applied, when M is greater than (or less than) a specific value. When M is sufficiently small, the length of a segment is long, and thus it may be efficient to apply a CS or a PS on a sub-segment basis. On the contrary, when M is sufficiently large, the length of the segment is short, and thus it may be efficient to apply a CS or a PS on an FD segment group basis. The specific value may be predefined (for each M value) or set by RRC or an SIB.

Alternatively, the unit for applying a CS or a PS may be predefined differently according to an M value. Alternatively, after the unit for applying a CS or a PS is set by RRC or the like, the unit may be adaptively changed according to an M value used/set for LP-WUS transmission. Alternatively, an M value, a CS value, or a PS value, or a relationship between M and CS/PS may be configured through an SIB.

[2-10] An offset may be set for the CS or PS value on an OFDM symbol basis. That is, when LP-WUS data is transmitted through N OFDM symbols, an additional offset may be set for each OFDM symbol in addition to applying a CS or a PS on an FD segment basis (or on a segment group or sub-segment basis) within the OFDM symbol. For example, for convenience of description, when a sequence to which CS(n1) is applied for FD segment #1 is denoted as seq(n1) and a PS applied to the FD segment is denoted as p1, for M=4, it may be expressed as Equation 5 in the order of FD segments.

$$[\text{Equation 5}]$$

$$\{p1*seq(n1),\ p2*seq(n2),\ p3*seq(n3),\ p4*seq(n4)\}$$

For each $k^{th}$ OFDM symbol, when an offset of 'a(k)' is applied to a PS and an offset of 'b(k)' is applied to a CS, it may be expressed as [Equation 6] in the order of TD segments.

$$\{(p1*a(k))*seq(n1+b(k)),\ (p2*a(k))*seq(n2+b(k)),\ (p3*a(k))*seq(n3+b(k)),\ (p4*a(k))*seq(n4+b(k))\} \qquad [\text{Equation 6}]$$

When an offset is applied to the PS and no offset is applied to the CS, it may correspond to a case where b(k)=0 in Equation 6. When no offset is applied to the PS and an offset is applied to the CS, it may correspond to a case where a(k)=1 in Equation 6.

The offset may be applied in units of X OFDM symbol groups. X may be predefined or set by RRC or an SIB.

The offset may be determined according to a cell ID, an SFN, a (sub)frame index, a slot index, and/or a symbol index. For example, a relationship between the offset value for the PS or the CS and the cell ID and/or one or more indexes may be configured by RRC or an SIB. Alternatively, the offset value for the CS or the PS may be determined through a (predefined) equation in which the cell ID and/or the one or more indexes are variables. For example, a cell-specific offset may be determined through an equation "cell ID" mod "sequence length." Alternatively, an equation "slot index" mod "sequence length" or an equation "symbol index" mod "sequence length" may be used as the offset.

[2-11] When an encoding method such as repetition is used in the frequency domain, the proposed offset and/or CS and/or PS values, whether to apply them, and the application unit may be independently defined or configured for each FD segment (or segment group or sub-segment).

[2-12] The CS and/or PS value for each FD segment (or segment group or sub-segment) or the CS or PS offset value for each OFDM symbol (or group) as proposed above may differ for each cell. For example, an additional offset determined by a function of a cell ID may be added for each cell. Through this method, reduction of inter-cell interference may be expected.

For example, the equation "cell ID" mod "sequence length" may be used as the root index of a ZC sequence or as the initial state of an m-sequence or the like. Alternatively, the equation "cell ID" mod "sequence length" may be used as a cell-specific CS value or PS value. Alternatively, an offset value of 0 may be applied in the first OFDM symbol of a slot satisfying the equation "slot index" mod "sequence length" = 0 or in an OFDM symbol satisfying the equation "symbol index" mod "sequence length"=0, and specified offset, CS, and PS values may be sequentially applied starting from the next OFDM symbol.

[2-13] Different values for a CS and/or a PS applied on an FD segment (or segment group or sub-segment) basis or a CS or PS offset value applied on an OFDM symbol (or group) basis may be applied between an LP-WUS used for RRC connected mode and an LP-WUS used for RRC idle/inactive mode.

[3] Method for configuring parameter to apply time/frequency-domain sequence

[3-1] To apply the proposed time-domain or frequency-domain sequences, one or more of the following pieces of information may be transmitted/configured to/for the UE (by the BS).

- Number of LP-WUS bits or segments transmitted per OFDM symbol
- Sequence length, CS, and PS

  ■ Initial state and/or phase (for generating a specific sequence)
  ■ Root index of ZC sequence

- Offset for each segment position, or offset + segment size

  ■ Or offset for first segment of OFDM symbol + segment size
  ■ In this case, the offset may mean the number of samples from the starting point of the CP of a corresponding OFDM symbol to a corresponding segment, or the number of samples from the starting point of a long CP of a 0.5-ms duration to the corresponding segment. Alternatively, when there is an invalid period during a CP period or a specific period including the CP, the offset may mean the number of samples to the next valid segment.

- Length of OOK/FSK symbol, number of OOK/FSK symbols (included in OFDM symbol)
- Length/number of TD segments (or segment groups or sub-segments) (included in OFDM symbol)
- DFT-related information (e.g., DFT size) of OOK-4

  ■ Mapping information between DFT output and IFFT input when the DFT size is different from the number of SCs for LP-WUS

[3-2] A configuration value for applying a proposed time-domain or frequency-domain sequence (including the information in [3-1] above) may be transmitted/configured to/for the UE (by the BS) in one or more of the following methods.

- Configuration through RRC or SIB
- Indication/configuration through dedicated sync signal for LP-WUS
- When a preamble exists before LP-WUS data, indication/configuration through this preamble
- Indication/configuration through dedicated signaling (such as SDT for inactive mode)
- Method for determining configuration value for LP-WUS through specific equation

  ■ The above information may be determined as a function of a cell ID
  ■ The above information may be determined as a function of an SFN
  ■ The above information may be determined as a function of a (sub)frame or slot or symbol index
  ■ The above information may be determined as a function of the SCS of the MR

The present disclosure is not limited to transmission and reception of UL and/or DL signals. For example, the present disclosure may also be used for direct communication between UEs. In addition, the term BS in the present disclosure may conceptually include a relay node as well as a base station. For example, although an operation of a BS in the present disclosure may be performed by a BS, it may also be performed by a relay node.

## A-IoT (Ambient Internet of Things)

A-IoT may refer to a new device type/segment that operates solely on harvested energy from a surrounding environment. For example, A-IoT may refer to a new class of IoT devices that are powered by various harvestable energy sources such as radio waves, light, motion, and thermal energy.

For instance, active signal generation and/or backscattering may be one of the communication technologies considered to achieve the low-power operation of A-IoT devices. For example, backscattering is a widely used technology in radio frequency identification (RFID), enabling a device to communicate with a network by reflecting incident waves after modulating them with information to be transmitted. In this case, the device may be powered by an incident RF signal or stored energy.

A-IoT devices may be classified into various types such as passive, semi-passive, and active, depending on their energy storage and transmission signal generation methods. A passive device does not have an energy storage device (e.g., capacitor) and may communicate based on backscattering communication technology. For example, a semi-passive device has an energy storage device and may communicate using backscattering communication technology with the assistance of the energy storage device. For example, an active device has an energy storage device and may communicate by actively generating a signal using an active RF component and stored energy. For example, the following three types of IoT devices may be considered in the present disclosure. For example, device A may be a device with no energy storage and no independent signal generation (e.g., a device supporting backscattering transmission). For example device B may be a device with energy storage but no independent signal generation (e.g., a device supporting backscattering transmission). In this case, the use of stored energy may include amplification of a reflected signal. For example, device C may be a device with energy storage and independent signal generation (e.g., a device having an active RF component for transmission).

For example, to support A-IoT devices in indoor and outdoor scenarios, the following basic topology may be considered. For example, the basic topology may include direct BS-A-IoT device connection, BS-intermediate node-A-IoT device connection, connection support by an auxiliary node, and/or UE-A-IoT device connection. The basic topology proposed in the present disclosure is exemplary, and the proposal of the present disclosure may be extended/applied to other topologies.

A-IoT device types may be divided into two categories as follows. For example, a type-1 device may have a maximum power consumption of approximately 1uW, be capable of energy storage, not have an amplification function, and perform transmission by backscattering a carrier wave (CW) provided by an external source (e.g., a reader like a BS or a UE, or a separate node). For example, a type-2 device may have a maximum power consumption of approximately several hundred uW, be capable of energy storage, have an amplification function, and perform transmission by either backscattering a CW provided by an external source (e.g., a reader like a BS or a UE, or a separate node).

Besides the above classification, for example, A-IoT device types/classes may be divided based on parameters (e.g., presence/capacity of energy storage, level of energy/power consumption, presence/capability of amplification, presence/capability of a band-pass filter (BPF), supported DL/UL transmission scheme(s), and so on) related to device characteristics or their combinations. For example, the BPF capability may be distinguished by the 3-db BW of a supported BPF, sharpness, and so on, and the UL transmission schemes may be divided into, for example, backscattering UL transmission and UL transmission by internal signal generation.

Further, the A-IoT device types/classes may be sub-divided based on the parameters (e.g., presence/capacity of energy storage, level of energy/power consumption, presence/capability of amplification, presence/capability of a BPF, supported DL/UL transmission scheme(s), and so on) related to device characteristics or their combinations. For example, type-2 devices may be split into type 2a that performs transmission by backscattering a CW provided by an external source (e.g., a reader like a BS or a UE, or a separate node) and type 2b that performs transmission using an internally generated signal. Type 2a and type 2b may be identical in that they consume approximately several hundred uW, are capable of energy storage, and have an amplification capability.

An LP-WUS may be transmitted and received between A-IoT devices. Specifically, a waveform transmitted from a reader to an A-IoT device may correspond to a waveform proposed in the embodiments of the present disclosure. An A-IoT device may include only an LR without an MR. Therefore, upon receipt of an LP-WUS, the A-IoT device may perform an operation such as initial access or data transmission/reception through the LR, instead of an operation of triggering (or activating) the MR.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

Implementation Examples

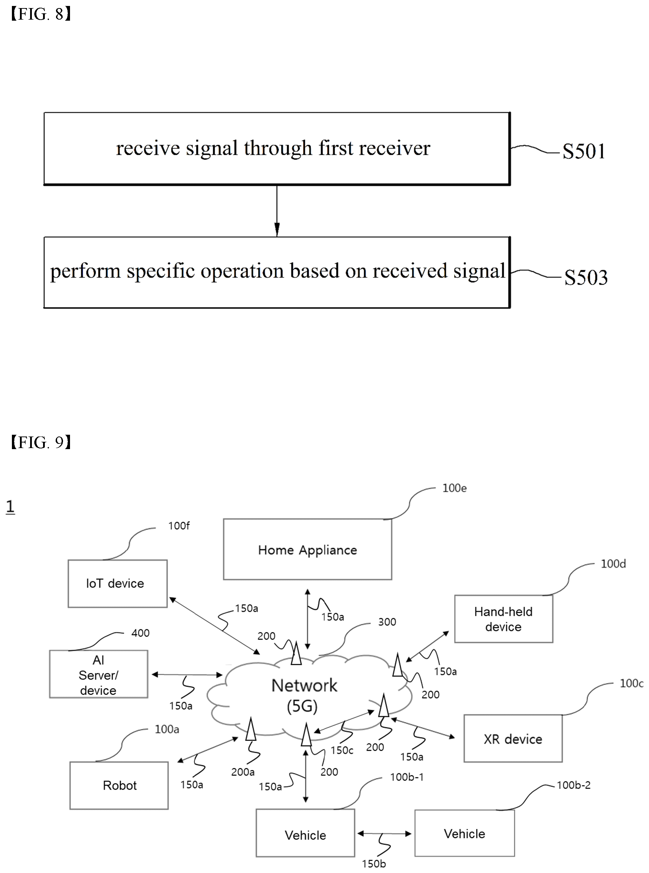

FIG. 8 is a flowchart of a signal transmission and reception method according to embodiments of the present disclosure.

Referring to FIG. 8, a signal transmission and reception method according to an embodiment of the present disclosure may be performed by a UE, and include receiving a signal through a first receiver (S501) and performing a specific operation based on the reception of the signal (S503).

The specific operation may be an operation of triggering a second receiver by the UE. Alternatively, when the UE is an A-IoT device, it may be an operation of transmitting a response signal based on the signal by the UE.

The signal may be an LP-WUS described in the present disclosure. Even if expressed by another name, when the signal is a signal for triggering an operation of the other receiver based on being received by a specific receiver, or a signal received by an A-IoT device, it may correspond to the LP-WUS of the present disclosure.

The first receiver corresponds to a separate receiver (i.e., LP-WUR) for receiving the LP-WUS, and the second receiver corresponds to a main receiver (i.e., MR). While the specific names may change from the LP-WUR and the MR to other names, the first receiver is designed to consume less power than the second receiver. The main receiver may be a receiver of a legacy NR system, and even if it is a receiver for a communication system other than the NR system, it may correspond to the main receiver, when it is triggered based on signal reception of the other receiver that consumes less power.

However, in the case of an A-IoT device, it may include only the first receiver out of the first and second receivers.

Referring to sections [1] and [2], a set of elements corresponding to 1-bit information of the signal is defined as one segment. The signal may include N segments, and different sequences may be used for the N segments.

The elements correspond to samples in the time domain or REs in the frequency domain.

Commonly in sections [1] and [2], a reference sequence of a length equal to the number of time-domain samples or frequency-domain REs included in one segment may be applied to N segments. A different sequence to be applied to each of the N segments is generated by setting at least one of a CS value or a PS value differently for the reference sequence. Specifically, each method of sections [1-4] and [2-4] may be referred to. Although a sequence of a length equal to the number of time-domain samples or frequency-domain REs in one segment may be selected as the reference sequence from the start, a portion of a sequence of a length longer than the number of time-domain samples or frequency-domain REs in the one segment may be used as the reference sequence, or the reference sequence may also be generated by padding zeroes to or repeating a sequence of a length shorter than the number of time-domain samples or frequency-domain REs in the one segment.

Referring to sections [1] and [2], the reference sequence may be applied in units of a segment group including a plurality of segments or a sub-segment which is a portion of one segment. Although a sequence of a length equal to the number of time-domain samples or frequency-domain REs in one segment group may be selected as the reference, a portion of a sequence of a length longer than the number of time-domain samples or frequency-domain REs in the one segment group may be used as the reference sequence, or the reference sequence may also be generated by padding zeroes to or repeating a sequence of a length shorter than the number of time-domain samples or frequency-domain REs in the one segment group. Further, although a sequence of a length equal to the number of time-domain samples or frequency-domain REs in one sub-segment may be selected as the reference, a portion of a sequence of a length longer than the number of time-domain samples or frequency-domain REs in the one sub-segment may be used as the reference sequence, or the reference sequence may also be generated by padding zeroes to or repeating a sequence of a length shorter than the number of time-domain samples or frequency-domain REs in the one sub-segment.

Referring to sections [1-7] and [2-8], the signal may include M segments per OFDM symbol. M is a natural number greater than N. Among the M segments, different sequences may be applied only to segments with a corresponding bit value of 1.

Referring to sections [1-8] and [2-9], when the signal includes M segments per OFDM symbol, a range in which different sequences are applied may vary depending on the value of M. For example, when M is less than (or equal to or less than) a first threshold, different sequences may be applies on a sub-segment basis, and when M is greater than (or equal to or greater than) a second threshold, different sequences may be applies on a segment group basis. When M is equal to or greater than (or greater than) the first threshold and is equal to or less than (or less than) the second threshold, different sequences may be applies on a segment basis

Referring to sections [1-9] and [2-10], a CS value and a PS value may be determined based on an offset applied on an OFDM symbol basis. Specifically, an offset may be applied on an OFDM symbol basis according to one of Equations 2, 4, and 6.

Referring to sections [1-11] and [2-12], the CS value and the PS value may be set differently for each cell. Specifically, the CS value and the PS value may vary based on a cell ID and a sequence length.

Additionally, one or more pieces of information described in section [3-1] may be transmitted/configured to/for a UE by a BS. Further, the information may be transmitted/configured by a combination of one or more methods in section [3-2].

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 9 illustrates a communication system 1 applied to the present disclosure.

Referring to FIG. 9, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

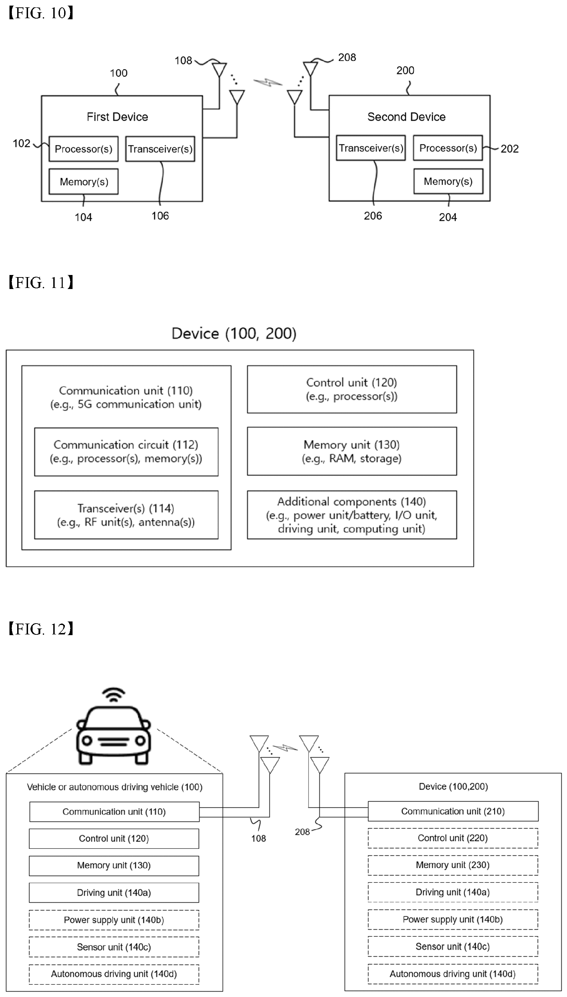

FIG. 10 illustrates wireless devices applicable to the present disclosure.

Referring to FIG. 10, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 9.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 11 illustrates another example of a wireless device applied to the present disclosure. The wireless device may be implemented in various forms according to a use case/service (refer to FIG. 9).

Referring to FIG. 11, wireless devices 100 and 200 may correspond to the wireless devices 100 and 200 of FIG. 10 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 10. For example, the transceiver(s) 114 may include the one or more transceivers 106 and 206 and/or the one or more antennas 108 and 208 of FIG. 10. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 9), the vehicles (100b-1 and 100b-2 of FIG. 9), the XR device (100c of FIG. 9), the hand-held device (100d of FIG. 9), the home appliance (100e of FIG. 9), the IoT device (100f of FIG. 9), a digital broadcasting terminal, a hologram device, a public safety device, an MTC device, a medical device, a FinTech device (or a finance device), a security device, a climate/environment device, the AI server/device (400 of FIG. 9), the BSs (200 of FIG. 9), a network node, or the like. The wireless device may be mobile or fixed according to a use case/service.

In FIG. 11, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 12 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 12, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 11, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

1. A method for transmitting and receiving a signal by a user equipment (UE) in a wireless communication system, the method comprising:

   receiving a signal through a first receiver of the UE; and
   performing a specific operation based on the reception of the signal,
   wherein a set of elements corresponding to 1-bit information of the signal is defined as one segment, and different sequences are used for N segments, and

wherein N is a natural number equal to or greater than 2.

2. The method of claim 1, wherein the signal is a low power wake-up signal (LP-WUS).

3. The method of claim 1, wherein the specific operation includes an operation of triggering a second receiver of the UE.

4. The method of claim 1, wherein based on the UE being an ambient Internet of things (A-IoT) device, the specific operation includes an operation of transmitting a response signal based on the signal by the UE.

5. The method of claim 1, wherein the elements correspond to samples in a time domain or resource elements in a frequency domain.

6. The method of claim 1, wherein a base sequence of a length equal to the number of the elements included in the one segment is applied to the N segments.

7. The method of claim 6, wherein the different sequences are generated by setting at least one of a cyclic shift (CS) value or a phase shift (PS) value differently for the base sequence.

8. The method of claim 6, wherein the base sequence is configured as a portion of a sequence of a length longer than the number of the elements, the portion having a length equal to the number of the elements, and starts at a start point or ends at an end point of the sequence of the length longer than the number of the elements.

9. The method of claim 6, wherein the base sequence is configured by padding a zero to a sequence of a length shorter than the number of the elements or by repeating a sequence of a length shorter than the number of the elements.

10. The method of claim 1, wherein a base sequence of a length equal to the number of elements included in one segment group including a plurality of segments is applied to the N segments.

11. The method of claim 1, wherein a base sequence of a length equal to the number of elements included in a sub-segment being a portion of the segment is applied to the N segments.

12. The method of claim 1, wherein based on M segments per orthogonal frequency division multiplexing (OFDM) symbol being included in the signal, the N segments are segments having a corresponding bit value of 1 among the M segments.

13. The method of claim 1, wherein M segments per OFDM symbol are included in the signal, and
wherein based on M being within a specific range, different sequences are used for the N segments.

14. The method of claim 7, wherein the CS value and the PS value are determined based on a cell ID through which the signal is transmitted and the length of the base sequence.

15. The method of claim 7, wherein the CS value and the PS value are determined based on an offset in units of OFDM symbols.

16. A user equipment (UE) for transmitting and receiving a signal in a wireless communication system, the UE comprising:

at least one transceiver;
at least one processor; and
at least one memory operably connected to the at least one processor and storing instructions that, when executed, cause the at least one processor to perform a specific operation,
wherein the operation includes:

receiving a signal through a first receiver of the UE; and
performing a specific operation based on the reception of the signal,
wherein a set of elements corresponding to 1-bit information of the signal is defined as one segment, and different sequences are used for N segments, and
wherein N is a natural number equal to or greater than 2.

17. An apparatus for a user equipment (UE), comprising:

   at least one processor; and
   at least one computer memory operably connected to the at least one processor and, when executed, causing the at least one processor to perform an operation,
   wherein the operation includes:

   receiving a signal through a first receiver of the UE; and
   performing a specific operation based on the reception of the signal,
   wherein a set of elements corresponding to 1-bit information of the signal is defined as one segment, and different sequences are used for N segments, and
   wherein N is a natural number equal to or greater than 2.

18. A non-transitory computer-readable storage medium including at least one computer program that causes a user equipment (UE) including at least one processor to perform an operation,
   wherein the operation includes:

   receiving a signal through a first receiver of the UE; and
   performing a specific operation based on the reception of the signal,
   wherein a set of elements corresponding to 1-bit information of the signal is defined as one segment, and different sequences are used for N segments, and
   wherein N is a natural number equal to or greater than 2.

【FIG. 1】

【FIG. 2】

【FIG. 3】

【FIG. 4】

【FIG. 5】

【FIG. 6】

【FIG. 7】

【FIG. 8】

```
┌─────────────────────────────────────────────┐
│                                             │
│     receive signal through first receiver    │ ─── S501
│                                             │
└─────────────────────────────────────────────┘
                      │
                      ▼
┌─────────────────────────────────────────────┐
│                                             │
│  perform specific operation based on received signal │ ─── S503
│                                             │
└─────────────────────────────────────────────┘
```

【FIG. 9】

【FIG. 10】

【FIG. 11】

【FIG. 12】

## INTERNATIONAL SEARCH REPORT

| International application No. |
|---|
| **PCT/KR2024/011498** |

| A. | CLASSIFICATION OF SUBJECT MATTER |
|---|---|

**H04L 27/26**(2006.01)i; **H04L 27/04**(2006.01)i; **H04L 27/12**(2006.01)i; **H04W 52/02**(2009.01)i

According to International Patent Classification (IPC) or to both national classification and IPC

| B. | FIELDS SEARCHED |
|---|---|

Minimum documentation searched (classification system followed by classification symbols)

H04L 27/26(2006.01); H04L 5/00(2006.01); H04W 52/02(2009.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: LP-WUS, 트리거링(triggering), 요소 집합(element set), 세그먼트 (segment), 시퀀스(sequence)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2023-122910 A1 (GUANGDONG OPPO MOBILE TELECOMMUNICATIONS CORP., LTD.) 06 July 2023 (2023-07-06)<br>See claims 1, 5 and 14. | 1-5,12-13,16-18 |
| A |  | 6-11,14-15 |
| Y | WO 2022-110236 A1 (HUAWEI TECHNOLOGIES CO., LTD.) 02 June 2022 (2022-06-02)<br>See claims 1-2 and 9. | 1-5,12-13,16-18 |
| Y | CN 116195283 A (BEIJING XIAOMI MOBILE SOFTWARE CO., LTD.) 30 May 2023 (2023-05-30)<br>See paragraphs [0121]-[0124]; claims 6-7; and figure 3. | 4 |
| A | WO 2022-266036 A1 (IDAC HOLDINGS, INC.) 22 December 2022 (2022-12-22)<br>See paragraph [0224]; and figure 12. | 1-18 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 November 2024** | **25 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** |  |
| Facsimile No. **+82-42-481-8578** | Telephone No. |

Form PCT/ISA/210 (second sheet) (July 2022)

## INTERNATIONAL SEARCH REPORT

| International application No. |
| :--- |
| **PCT/KR2024/011498** |

### C. DOCUMENTS CONSIDERED TO BE RELEVANT

| Category* | Citation of document, with indication, where appropriate, of the relevant passages | Relevant to claim No. |
| :---: | :--- | :---: |
| A | KR 10-2018-0029286 A (WILUS INSTITUTE OF STANDARDS AND TECHNOLOGY INC.) 21 March 2018 (2018-03-21) See paragraphs [0052]-[0053]; and figure 8. | 1-18 |

Form PCT/ISA/210 (second sheet) (July 2022)

**INTERNATIONAL SEARCH REPORT**
Information on patent family members

International application No.

**PCT/KR2024/011498**

| Patent document cited in search report | | | Publication date (day/month/year) | Patent family member(s) | | | Publication date (day/month/year) |
|---|---|---|---|---|---|---|---|
| WO | 2023-122910 | A1 | 06 July 2023 | CN | 118383060 | A | 23 July 2024 |
| WO | 2022-110236 | A1 | 02 June 2022 | CN | 116325603 | A | 23 June 2023 |
| | | | | EP | 4240078 | A1 | 06 September 2023 |
| | | | | EP | 4240078 | A4 | 20 December 2023 |
| | | | | US | 2023-0300016 | A1 | 21 September 2023 |
| CN | 116195283 | A | 30 May 2023 | WO | 2024-138339 | A1 | 04 July 2024 |
| WO | 2022-266036 | A1 | 22 December 2022 | BR | 112023026283 | A2 | 05 March 2024 |
| | | | | CN | 117751632 | A | 22 March 2024 |
| | | | | EP | 4356655 | A1 | 24 April 2024 |
| | | | | KR | 10-2024-0032842 | A | 12 March 2024 |
| | | | | US | 2024-0284456 | A1 | 22 August 2024 |
| KR | 10-2018-0029286 | A | 21 March 2018 | None | | | |

Form PCT/ISA/210 (patent family annex) (July 2022)